# EUROPEAN PATENT SPECIFICATION

(11) **EP 4 152 121 B1**
(45) Date of publication and mention of the grant of the patent: **15.10.2025**
(21) Application number: 21804778.5
(22) Date of filing: 11.05.2021
(51) Int. Cl.: G06F 1/16, G09F 9/30

(54) **ELECTRONIC DEVICE COMPRISING FLEXIBLE DISPLAY**
ELEKTRONISCHE VORRICHTUNG MIT FLEXIBLER ANZEIGE
DISPOSITIF ÉLECTRONIQUE COMPRENANT UN ÉCRAN SOUPLE

(30) Priority: 15.05.2020 KR 20200058526
(43) Date of publication of application: 22.03.2023
(73) Proprietor: Samsung Electronics Co., Ltd., Gyeonggi-do 16677 (KR)
(72) Inventor: KIM, Jungjin, Suwon-si Gyeonggi-do 16677 (KR); NOH, Jaehwa, Suwon-si Gyeonggi-do 16677 (KR); LEE, Taekyung, Suwon-si Gyeonggi-do 16677 (KR); KIM, Kwangtai, Suwon-si Gyeonggi-do 16677 (KR); YOO, Minwoo, Suwon-si Gyeonggi-do 16677 (KR)
(74) Representative: HGF
(86) International application number: PCT/KR2021/005835
(87) International publication number: WO 2021/230601

(56) References cited:
- EP-A1- 2 573 747
- KR-A- 20170 141 438
- KR-A- 20180 128 243
- KR-A- 20190 101 605
- KR-A- 20190 119 719
- US-A1- 2014 211 399
- US-A1- 2017 060 183
- US-A1- 2019 268 455

## Description

### [Technical Field]

The disclosure relates to a technology related to an electronic device including a flexible display, and more particularly, to a technology for protecting a flexible display.

### [Background Art]

A display device using a flat panel display panel, such as a liquid crystal display device, a plasma display device, an organic light-emitting display device, an electrophoretic display device, or an electrowetting display device, is mainly applied to a notebook computer, a portable electronic device, a television, or a monitor.

The display panel is limited in its application and use due to the use of an inflexible glass substrate. Accordingly, in recent years, a flexible display device, which employs a flexible substrate such as a plastic substrate to be bendable instead of a glass substrate that is inflexible, has come to attract attention as a new display device.

Recently, with the development of display-related technologies, display devices that are deformable, for example, foldable, rollable, or extensible in at least one direction, in the use stage, are being researched and developed. Due to their deformability into various shapes, these displays may satisfy both the request for enlargement of the display in the use stage and the request for miniaturization of the display for portability.

EP2573747 A1 concerns an electronic device comprising a housing and a retractable display conceived to be alternated between an at least partially extended state and a retracted state, the device comprising a displaceable bar integrated in the housing and being arranged for removing contamination from at least a front surface of the display. The flexible display can be retracted by sliding the side members into the housing using, for example, a grip.

US2017/060183 A1 concerns an electronic device having a pair of elongated housings. A flexible display may be placed in a first position in which the display is retracted within one of the housings and a second position in which the flexible display is deployed and extends between the housings in a planar shape for viewing by a user. Support structures such as rigid slats that run parallel to the housings and bistable slats that run perpendicular to the rigid slats may be used to support the flexible display. Speakers, microphones, cameras, and other components can be mounted in the housings. The housings may be held together using magnets and may contain electrical components such as integrated circuits, batteries, and other devices. The components may be mounted on printed circuit boards that rotate within a rotating roller around which the display is wrapped when retracted.

### [Disclosure of Invention]

### [Technical Problem]

A display may be fixedly coupled to the internal structure of a device employing the display. An electronic device employs a flexible display, and at least a part of the flexible display is movable with respect to a portion of the electronic device. Accordingly, a gap may exist between the flexible display and at least some structures of the electronic device. However, due to the gap, foreign substances may be introduced into the electronic device. When foreign substances are introduced into a space between at least some structures of the electronic device and the display, the surface of the display may be damaged or an edge portion of the display may be damaged.

An embodiment of the disclosure provides an electronic device which is provided with a structure capable of protecting a flexible display to prevent foreign substances from being introduced through a gap between the flexible display and a housing of the electronic device.

The technical problems to be addressed by this disclosure are not limited to those described above, and other technical problems, which are not described above, may be clearly understood by a person ordinarily skilled in the related art to which this disclosure belongs.

### [Solution to Problem]

In an embodiment, an electronic device is provided according to claim 1.

Also disclosed is an electronic device which may include: a housing including a first frame including a first side wall at least constituting a side surface in a first direction of the electronic device, and a second frame including a second side wall at least constituting a side surface in a second direction opposite to the first direction, the second frame being coupled to the first frame to be movable in the first direction or the second direction; a flexible display disposed in a space surrounded by the first frame and the second frame, the flexible display being drawn into or drawn out from an inside of the first frame by the movement of the second frame; and a foreign substance prevention structure including a shaft partly located in a gap between the first side wall and the display and extending in a longitudinal direction of the first side wall, and a brush member disposed on at least a portion of an outer peripheral surface of the shaft and extending toward a surface of the display.

Also disclosed is an electronic device which may include: a housing including a first frame including a first side wall at least constituting a side surface in a first direction of the electronic device, and a second frame including a second side wall at least constituting a side surface in a second direction opposite to the first direction, the second frame being coupled to the first frame to be movable in the first direction or the second direction; a flexible display disposed in a space surrounded by the first frame and the second frame, the flexible display being drawn into or drawn out from an inside of the first frame by the movement of the second frame; and a plurality of bars configured to support a bending portion of the display, wherein at least one of the plurality of bars may include cover parts disposed on both sides thereof, at least some of the bars being disposed on an edge of the display.

### [Advantageous Effects of Invention]

According to various embodiments of the disclosure, it is possible to provide an electronic device adopting a flexible display with means for preventing foreign substances from being introduced into the electronic device through a gap existing between the display and a housing.

According to various embodiments of the disclosure, by preventing foreign substances from being introduced into the electronic device by foreign substance prevention means, it is possible to prevent damage to the display and further protect other electronic components inside the housing.

### [Brief Description of Drawings]

FIG. 1A is a view illustrating an electronic device including an expandable housing in an embodiment.
FIG. 1B is an exploded perspective view of the electronic device in an embodiment.
FIG. 2 is a cross-sectional view taken along line I-I of the electronic device of FIG. 1A in a contracted state in an embodiment.
FIG. 3 is a cross-sectional view taken along line III-III of the electronic device of FIG. 1A in the expanded state in an embodiment.
FIG. 4 is a cross-sectional view taken along line II-II of the electronic device of FIG. 1A in an embodiment.
FIG. 5 is a view illustrating cover parts that cover a portion of the display in an embodiment.
FIG. 6 is a view illustrating a buffer member that protects the display in an embodiment.
FIG. 7 is a view illustrating a process of assembling a flexible display in an embodiment.
FIG. 8 is a view illustrating a support plate included in or coupled to the display in an embodiment.
FIG. 9 is a cross-sectional view taken along line I-I of the electronic device of FIG. 1A including a foreign substance prevention structure according to an embodiment.
FIG. 10 is a view illustrating a process in which foreign substances on the surface of the display are discharged to the outside of the electronic device by the foreign substance prevention structure according to an embodiment.
FIG. 11 is a view illustrating an electronic device including a cavity for collecting foreign substances therein in an embodiment.
FIG. 12 is a view illustrating a brush member 220 included in the foreign substance prevention structure of FIG. 9 in an embodiment.
FIG. 13 is a cross-sectional view taken along line I-I of the electronic device of FIG. 1A including the foreign substance prevention structure in an embodiment.
FIG. 14 is a view illustrating a state when the foreign substance prevention structure of FIG. 13 operates in an embodiment.
FIG. 15 is a flowchart for adjusting the gap between the display and a frame by the pad of FIG. 13 in an embodiment.

### [Mode for Carrying out the Invention]

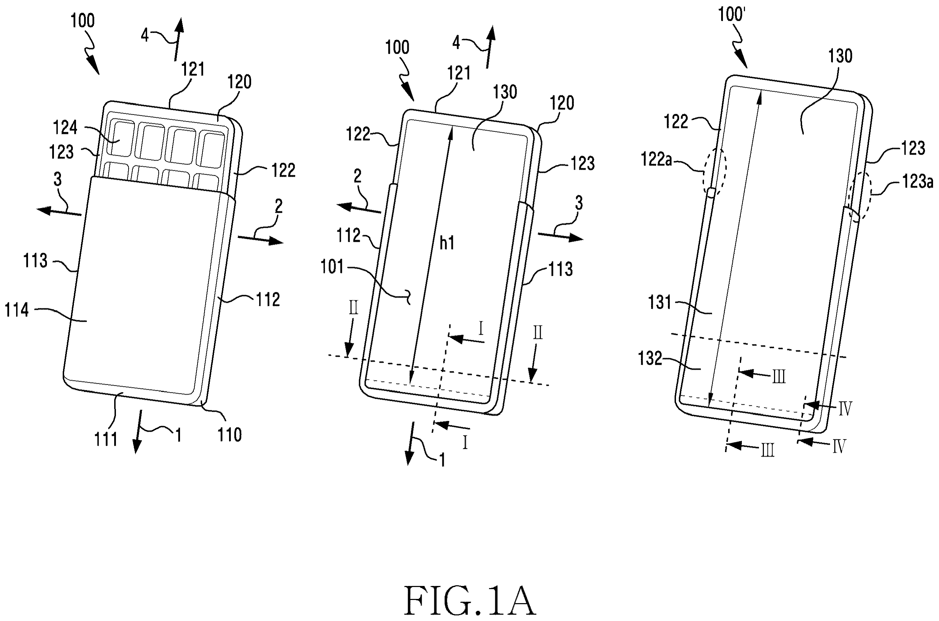

FIG. 1A illustrates an electronic device 100 including an expandable display 130 according to an embodiment.

In an embodiment, the electronic device 100 may include a size-adjustable housing. In an embodiment, the electronic device 100 may include a first frame 110 and a second frame 120 that is movably assembled (or coupled) to the first frame 110. The second frame 120 may be configured to be movable in a predetermined range with respect to the first frame 110. When the second frame 120 moves in the fourth direction 4 with respect to the first frame 110, the length of the entire housing may be increased. When the second frame 120 moves in the fourth direction 1 with respect to the first frame 110, the length of the entire housing may be decreased. In the disclosure, the expansion or contraction of the housing may mean that the length of the entire housing is increased or decreased in response to the relative movement of the first frame 110 and the second frame 120.

In an embodiment, as the second frame 120 moves with respect to the first frame 110, a portion of the second frame 120 may be selectively accommodated in an accommodation space 101 defined by the first frame 110. In an embodiment, when a portion of the second frame 120 is accommodated in the accommodation space 101, the size of the housing (or the electronic device 100) may be decreased. In this case, a portion of the second frame 120 may not be exposed to the outside by being covered by the first frame 110. In an embodiment, when a portion of the second frame 120 comes out of the accommodation space 101, the size of the housing may be increased. According to an embodiment of the disclosure, when the second frame 120 is inserted into or drawn out from the first frame 110, it may mean that the second frame 120 moves into the space 101 defined by the first frame 110 or comes out of the space 101.

In an embodiment, the first frame 110 may include a first side wall 111 constituting a side surface (or a lower surface) of the electronic device 100 oriented in a first direction 1. In an embodiment, the first frame 110 may include a second side wall 112 constituting a side surface (or a left surface) oriented in a second direction 2. In an embodiment, the end of the second side wall 112 in the first direction 1 may be connected to the end of the first side wall 111 in the second direction 2. In an embodiment, the first frame 110 may include a third side wall 113 constituting a side surface (or a right surface) oriented in the third direction 3. In an embodiment, the end of the third side wall 113 in the first direction 1 may be connected to the end of the first side wall 111 in the third direction 3. In an embodiment, the first to third side walls 111 to 113 may be integrally configured.

In an embodiment, the first frame 110 may include a first plate 114 constituting a portion of the rear surface of the electronic device 100. An edge of the first plate 114 may be connected to a side wall of the first frame 110. In an embodiment, the first plate 114 and the side wall of the first frame 110 may be integrally configured. For example, portions extending from the edges of the first plate 114 in the first direction 1, the second direction 2, and the third direction 3 toward the front surface of the electronic device 100 may be defined as the first side wall 111, the second side wall 112, and the third side wall 113, respectively.

In an embodiment, the second frame 120 may include a fourth side wall 121 constituting a side surface (or an upper surface) of the electronic device 100 oriented in a fourth direction 4. In an embodiment, the second frame 120 may include a fifth side wall 122 constituting a side surface (or a left surface) of the electronic device 100 oriented in the second direction 2. In an embodiment, the end of the fifth side wall 122 in the fourth direction 4 may be connected to the end of the fourth side wall 121 in the second direction 2. In an embodiment, the second frame 120 may include a sixth side wall 123 constituting a side surface (or a right surface) of the electronic device 100 oriented in the third direction 3. In an embodiment, the end of the sixth side wall 123 in the fourth direction 4 may be connected to the end of the third side wall 113 in the third direction 3. In an embodiment, the fourth to sixth side walls 121 to 123 may be integrally configured.

In an embodiment, the second frame 120 may include a second plate 124 constituting a portion of the rear surface of the electronic device 100. An edge of the second plate 124 may be connected to a side wall of the second frame 120. In an embodiment, the second plate 124 and the side wall of the second frame 120 may be integrally configured. For example, portions extending from the edges of the second plate 124 in the second direction 2, the third direction 3, and the fourth direction 4 toward the front surface of the electronic device 100 may be defined as the fifth side wall 122, the sixth side wall 123, and the fourth side wall 121, respectively.

In an embodiment, a portion of the second frame 120 may be accommodated in a space defined by the first frame 110. In an embodiment, a portion of the second frame 120 may be accommodated in a space defined by the first side wall 111, the second side wall 112, and the third side wall 113 of the first frame 110. For example, a portion 122a of the fifth side wall 122 of the second frame 120 may be covered by the second side wall 112 so as not to be visible from the outside of the electronic device 100. A portion 123a of the sixth side wall 123 of the second frame 120 may be covered by the third side wall 113 so as not to be visible from the outside of the electronic device 100. A portion of the second plate 124 of the second frame 120 may be covered by the first plate 114 of the first frame 110 so as not to be visible from the outside of the electronic device 100.

In an embodiment, the size of the housing may be decreased or increased depending on the movement of the second frame 120 with respect to the first frame 110. For example, when the second frame 120 moves in the fourth direction 4 with respect to the first frame 110, the distance between the first side wall 111 and the fourth side wall 121 may increase, and the length of the housing in the first direction 1 may increase. As another example, when the second frame 120 moves in the first direction 1 with respect to the first frame 110, the distance between the first side wall 111 and the fourth side wall 121 may decrease, and the length of the housing in the first direction 1 may decrease.

In an embodiment, the second frame 120 may move with respect to the first frame 110 in a predetermined range. When the second frame 120 moves as far as possible in the first direction 1 with respect to the first frame 110 and the distance between the first side wall 111 and the fourth side wall 121 becomes the shortest, the housing may be defined to be in a first state. When the second frame 120 moves as far as possible in the fourth direction 4 with respect to the first frame 110 and the distance between the first side wall 111 and the fourth side wall 121 becomes the longest, the housing may be defined to be in a second state (or an expanded state). Assuming that the distance between the first side wall 111 and the fourth side wall 121 is a first distance in the contracted state and a second distance in the expanded state, when the distance between the first side wall 111 and the fourth side wall 121 is between the first distance and the second distance, the housing may be defined to be in a third state (or an intermediate expanded state).

In an embodiment, the electronic device 100 may include a display 130. In an embodiment, a portion of the display 130 may be exposed to the outside, and a portion may be hidden inside the housing not to be exposed to the outside. In an embodiment, the size of the portion of the display 130 that is visible from the outside may correspond to the area surrounded by the first frame 110 and the second frame 120. For example, the size of the portion exposed to the outside of the display 130 may correspond to the area surrounded by the first side wall 111, the second side wall 112, the third side wall 113, the fourth side wall 121, and the fifth side wall 122, and the sixth side wall 123.

In an embodiment, the electronic device 100 may include a display 130, the length of which is expandable. In an embodiment, a portion of the display 130 hidden inside the housing may be drawn out of the electronic device, which may increase the size of the portion exposed to the outside of the display 130.

In an embodiment, the size of the portion of the display 130 exposed to the outside of the electronic device 100 may increase or decrease in response to a change in the state of the housing. In an embodiment, the size of the portion of the display 130 exposed to the outside may increase as the second frame 120 moves in the fourth direction 4 with respect to the first frame 110. For example, the vertical length of the portion of the display 130 exposed to the outside may increase from a first length h1 to a second length h2.

In an embodiment, the display 130 may include a first portion 131, which is always exposed to the outside regardless of the state of the housing, and a second portion 132 that is selectively exposed to the outside depending on the state of the housing. In an embodiment, when the housing is in the first state, the second portion 132 of the display 130 may be hidden into the inner space of the housing. In an embodiment, when the housing is in the third state, a portion of the second portion 132 may be hidden in the inner space of the housing and the remaining portion may be exposed to the outside of the electronic device 100. In an embodiment, when the housing is in the second state, the entire second portion 132 may be exposed to the outside of the electronic device 100.

In an embodiment, the electronic device 100 may provide a screen corresponding to the size of the portion of the display 130 exposed to the outside. For example, when the housing is in the reduced state, the electronic device 100 may provide a screen corresponding to the size of the first portion 131. As another example, when the housing is in the expanded state, the electronic device 100 may provide a screen corresponding to the sum of the sizes of the first portion 131 and the second portion 132. As still another example, when the housing is in an intermediate expanded state, the electronic device 100 may provide a screen corresponding to the sum of the sizes of the first portion 131 and a portion of the second portion 132.

In an embodiment, the electronic device 100 may measure how much the second frame 120 moves with respect to the first frame 110 with at least one sensor. For example, the electronic device 100 may include a distance sensor (e.g., a TOF sensor) disposed inside the first frame 110 or the second frame 120. In an embodiment, the electronic device 100 may determine how much the housing is expanded with the distance sensor, and may determine the size of the portion of the display 130 exposed to the outside of the electronic device 100 based on the extent of the expansion of the housing. The electronic device 100 may provide a screen corresponding to the size of the display 130 exposed to the outside. For example, when the housing is switched from the reduced state to the expanded state, the display 130 may be expanded, and the size of an image displayed on the display 130 may also be enlarged.

In an embodiment, the display 130 may include a display panel and a cover window. For example, the cover window of the display 130 may include a material (e.g., glass or polymer) that is located in the outermost portion of the display 130 and is capable of protecting the display 130 panel. In an embodiment, the flexible display 130 may include a cover window including a flexible material to be deformable in response to the expansion of the housing. For example, the cover window of the flexible display 130 may include glass (e.g., ultra-thin glass) or a polymer (e.g., polyimide).

In the illustrated embodiment, the electronic device 100 may include the first frame 110 and the second frame 120, and the display 130 may be expanded in response to the movement of the second frame 120 with respect to the first frame 110. However, the embodiment of the disclosure is not limited to the illustrated embodiment, and in another embodiment, the second frame 120 may be omitted from the electronic device 100. In this case, the size of the display 130 may be increased by moving a separate structure coupled to the display 130 with respect to the first frame 110.

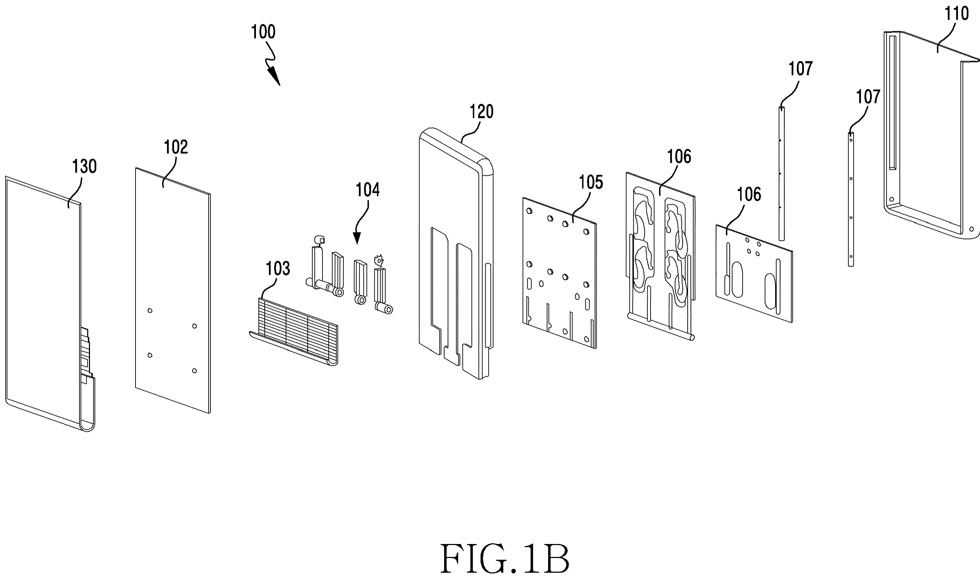

FIG. 1B is an exploded perspective view of the electronic device 100 in an embodiment.

In an embodiment, the electronic device 100 may include a top plate 102 disposed below the display 130. The top plate may support the display 130.

In an embodiment, the display 130 may be fixedly coupled to a driving unit 106 and moved with respect to the first frame 110 by the driving unit 106. In an embodiment, the display 130 may be fixedly coupled to the second frame 120. The second frame 120 may be moved with respect to the first frame 110 by the driving unit 106. When the second frame 120 is moved with respect to the first frame 110, the display 130 may also be moved along the second frame 120. In an embodiment, a side slide 107 may be disposed between the driving unit 106 and the first frame 110. In an embodiment, the side slide 107 may guide the relative movement of the driving unit 106 and the first frame 110.

In an embodiment, the electronic device 100 may include a rolling unit 104 assembled to an end of a fixing unit 105. In an embodiment, the display 130 may be bent along the rolling unit 104. The display 130 may bent 180 degrees while passing the rolling unit 104.

In an embodiment, a plurality of bars 103 may be disposed between the rolling unit 104 and the display 130. The plurality of bars 103 may extend in the width direction of the display 130. In an embodiment, the plurality of bars 103 may be configured to support the display 130 seated thereon.

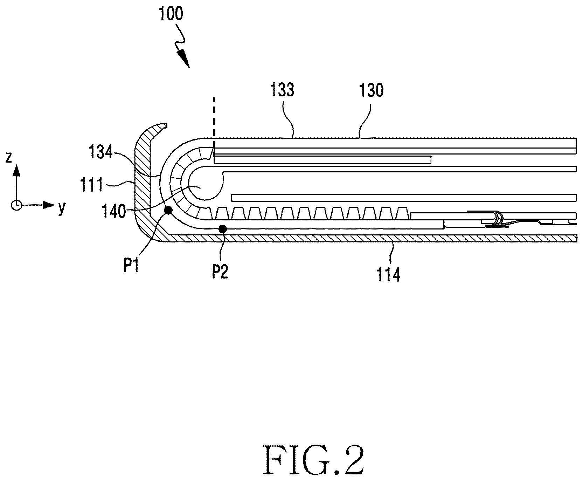

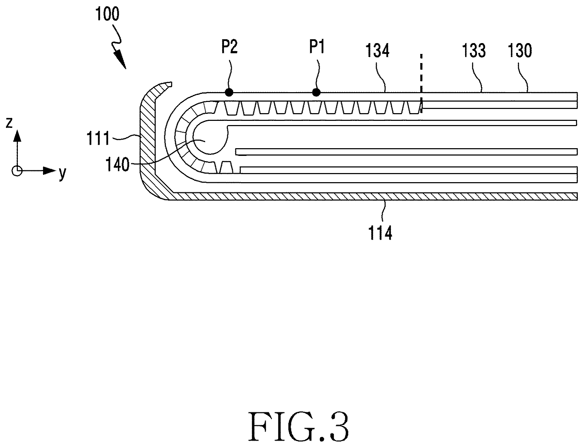

FIG. 2 is a cross-sectional view taken along line I-I of the electronic device 100 of FIG. 1A in a contracted state in an embodiment. FIG. 3 is a cross-sectional view taken along line III-III of the electronic device 100 of FIG. 1A in the expanded state in an embodiment.

In an embodiment, the electronic device 100 may include a roller part 140. In an embodiment, the roller part 140 may be fixedly coupled to the first frame 110. In an embodiment, the roller part 140 may be located in the inner space of the first frame 110, and may be disposed to be spaced apart from the first side wall 111 and the first plate 114 of the first frame 110.

In an embodiment, a portion of the display 130 may be hidden inside the housing (e.g., the space between the first frame 110 and the second frame 120) while being bent along the roller part 140. In an embodiment, a portion of the display 130 may be bent along the outer peripheral surface of the roller part 140 to face the inner surface of the first side wall 111.

In an embodiment, the display 130 may include a flat portion 133 and a bending portion 134 extending from the flat portion 133. In an embodiment, the flat portion 133 of the display 130 may move in the y-axis direction in response to the expansion or contraction of the housing. In an embodiment, the bending portion 134 may be bent in a U-shape around the roller part 140 in response to the expansion or contraction of the housing. In an embodiment, the bending portion 134 may be selectively exposed on the front surface of the electronic device 100 depending on whether or not the housing is expanded. A portion of the bending portion 134 may face the front surface of the electronic device 100 and a portion of the bending portion may face the rear surface of the electronic device 100.

In an embodiment, the roller part 140 is fixedly coupled to the first frame 110, and may maintain a position with respect to the first frame 110 regardless of the expansion or contraction of the housing. Therefore, even if the housing is expanded, the portion of the display 130 exposed to the outside may have a length extending from the first side wall 111 of the first frame 110 to the fourth side wall 121 of the second frame 120.

In an embodiment, in the contracted state of the housing, a portion of the bending portion 134 may be hidden inside the housing, and may be exposed to the front surface of the electronic device 100 in response to the expansion of the housing. In an embodiment, in the expanded state of the housing, a portion of the bending portion 134 may be disposed on the front surface of the housing, and may be hidden inside the housing in response to the reduction of the housing.

While the housing is being expanded, in one embodiment, a first point P1 of the display 130 may rotate clockwise around the roller part 140 and then move in a direction away from the first side wall 111 to be located on the front surface of the electronic device 100. In response to the expansion of the housing, the second point P2 of the display 130 may initially move toward the first side wall 111, rotate clockwise around the roller part 140, and then move in a direction away from the first side wall 111 to be located on the front surface of the electronic device 100.

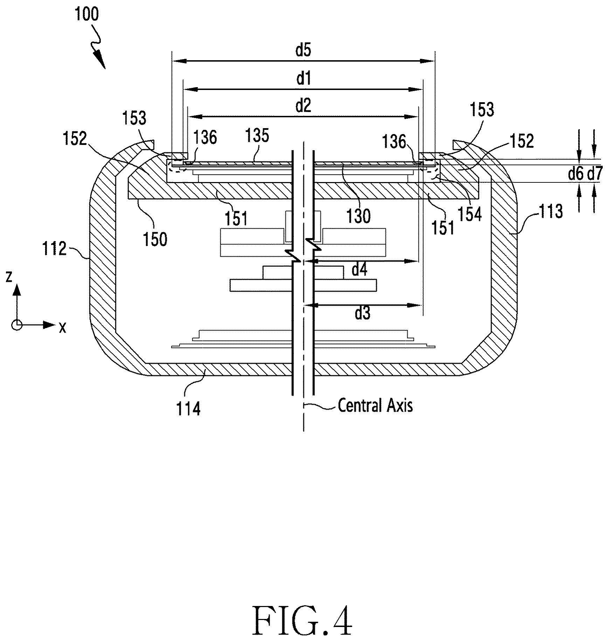

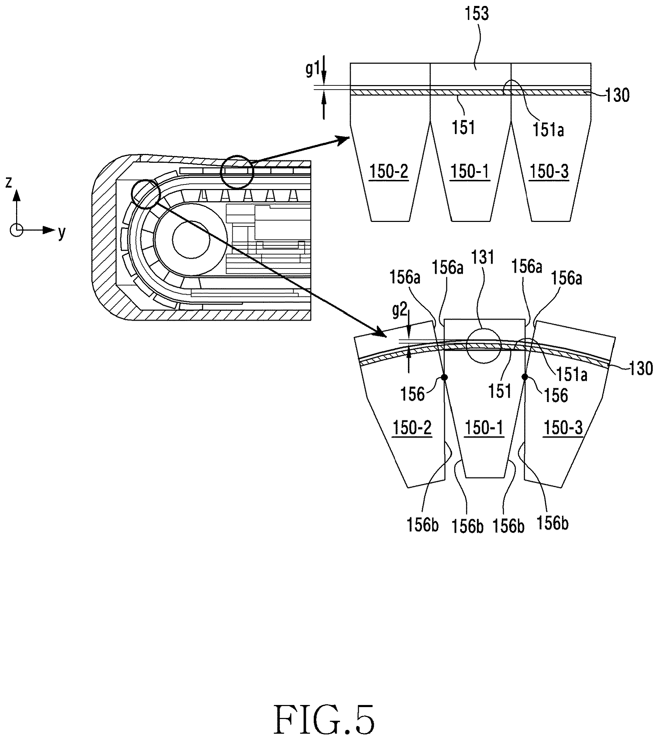

FIG. 4 is a cross-sectional view taken along line II-II of the electronic device 100 of FIG. 1A in an embodiment. FIG. 5 is a cross-sectional view taken along line IV-IV of the electronic device 100 of FIG. 1A in an embodiment. FIG. 5 illustrates an air gap between the display 130 and cover parts 153.

In an embodiment, the electronic device 100 may include bars 150 that support the bending portion 134 of the display 130. Referring to FIG. 4 together, the plurality of bars 150 connected to each other may be disposed under at least the bending portion 134 of the display 130. In an embodiment, the plurality of bars 150 may be configured such that the bending portion 134 is bent at a predetermined radius.

In an embodiment, each bar 150 may include a support part 151 configured to support the display 130. The support part 151 may extend from one edge of the display 130 to the opposite edge. In an embodiment, the length of the support part 151 may correspond to the width of the display 130.

In an embodiment, the bar may include side parts 152 extending vertically from the opposite ends of the support part 151. In an embodiment, the side parts 152 may enclose the edges of the display 130, respectively. In an embodiment, the side parts 152 may have a height corresponding to the thickness of the display 130.

In an embodiment, the bar 150 may include cover parts 153 extending horizontally from the ends of the side parts 152 toward the center of the bar 150. A portion of the cover part 153 may overlap a portion of the display 130. For example, when viewing the x-y plane, the display 130 may be partly covered by the cover part 153. In an embodiment, the cover part 153 may be partly located on the outermost layer 135 of the display 130. For example, when the width of the outermost layer 135 of the display 130 in the x-axis direction has a first length d1, the distance between two cover parts 153 located at the opposite sides of the bar may have a length d2 shorter than the length d1. For example, when the distance from the center of the display 130 to the edges of the outermost layer of the display 130 is a third length d3, the distance from the center of the display 130 to the ends of the cover parts 153 may be a fourth distance d4 shorter than the third distance d3.

In an embodiment, the display 130 may include a layer having a width wider than the distance d2 between the cover parts 153. In the illustrated embodiment, the widths d1 and d5 of some layers of the display 130 may be greater than the distance d2 between the cover parts 153. For example, when the electronic device 100 is viewed in the -z direction, portions (hereinafter, "edge portions") 136 close to the edges of the display 130 (or the outermost layer of the display 130) may be covered by the cover parts 153.

The edges of the display 130 may be vulnerable to an impact compared to other portions. Accordingly, the inner surfaces of the side parts 152 facing the edges of the display 130 are located a predetermined distance away from the edges of the display 130, respectively, and as a result, empty spaces 154 may occur between the edges of the display 130 and the side parts 152. When foreign substances are introduced into these spaces 154, the edges of the display 130 may be damaged by the foreign substances. In an embodiment, the cover parts 153 extend from the side parts 152 to cover the outermost layer 135 of the display 130. Accordingly, the cover parts 153 may prevent foreign substances from being introduced into the spaces 154 between the display 130 and the side parts 152 of the bar.

In an embodiment, the display 130 may be seated on the support part 151. When the display 130 is seated on the support part 151, an air gap may exist between the outermost layer 135 of the display 130 and the cover parts 152. In an embodiment, the distance d7 by which the support part 151 and the cover parts 153 are spaced apart from each other may be greater than the distance d6 between the support part 151 and the outermost surface of the display 130. This is because when the cover part 153 comes into contact with the display 130, the display 130 may be damaged. In particular, since the flexible display 130 has low rigidity or hardness compared to a general display 130, the flexible display 130 may be relatively easily damaged by interference with other structures. For example, the flexible display 130 may include ultra-thin glass or polyimide (PI) on a surface thereof, and these materials may be more vulnerable to an external impact than glass generally constituting the surface of a flat panel display 130.

In an embodiment, the distance d7 between the cover parts 153 and the support part 151 may be determined in consideration of the manufacturing tolerance of the display 130 or the bar 150 and/or the play of the display 130. For example, the cover parts 153 may have been configured such that the air gaps between the display 130 and the cover parts 153 has a thickness (d7 - d6) greater than 0 mm and smaller than 0.1 mm. However, in an actual product, the air gaps between several sections or multiple sections of the display 130 and the cover parts 153 may be 0 due to a tolerance or the like.

Referring to FIG. 5, in an embodiment, the air gaps between the cover parts 153 and the display 130 may be maintained even when the display 130 is bent. The cover parts 153 may be spaced apart from the outermost layer of the display 130 by the thicknesses g1 and g2 of the air gaps.

In an embodiment, each bar may rotate with respect to a neighboring bar in a predetermined angular range. In an embodiment, each bar may pivot about a neighboring bar and a rotation axis 156. In an embodiment, each bar may have two side surfaces forming a predetermined angle with reference to the rotation axis 156. Each bar may include a first side surface 156a and a second side surface 156b divided with reference to the rotation axis 156. The first side surface 156a and the second side surface 156b of each bar may face the first side surface 156a and the second side surface 156b of a neighboring bar, respectively.

In the illustrated embodiment, a first bar 150-1 may be neighbor to a second bar 150-2 and a third bar 150-3. The first bar 150-1 may pivot with respect to the second bar 150-2 and the third bar 150-3 about the rotation axes 156. For example, when the display 130 is bent, the distances between the first side surface 156a of the first bar 150-1 and the first side surfaces 156a of the neighboring bars 150-2 and 150-3 may be increased, and the distances between the second side surface 156b of the first bar 150-1 and the second side surfaces 156b of the neighboring bars 150-2 and 150-3 may be decreased. As another example, when the display 130 is unbent, the distances between the first side surface 156a of the first bar 150-1 and the first side surfaces 156a of the neighboring bars 150-2 and 150-3 may be decreased, and the distances between the second side surface 156b of the first bar 150-1 and the second side surfaces 156b of the neighboring bars 150-2 and 150-3 may be increased.

When the display 130 is bent, a portion of the display 130 may be closer to the cover parts 153. When the seating surfaces 151a of the support parts 151 on which the display 130 is put are flat, a portion 131 of the display 130 may be lifted from the seating surfaces 151a while the display 130 is bent. The lifted portion 131 of the display 130 approaches the cover parts 153, and accordingly, the separation distances between the display 130 and the cover parts 153 may be shortened. For example, in the state in which the display 130 is unbent, the air gaps between the display 130 and the cover parts 153 may have the first thickness g1, and in the state in which the display 130 is bent, the air gaps may have the second thickness g2. In an embodiment, the cover parts 153 may be configured not to interfere with the display 130 in consideration of the fact that the air gaps between the cover parts 153 and the display 130 may be reduced when the display 130 is bent.

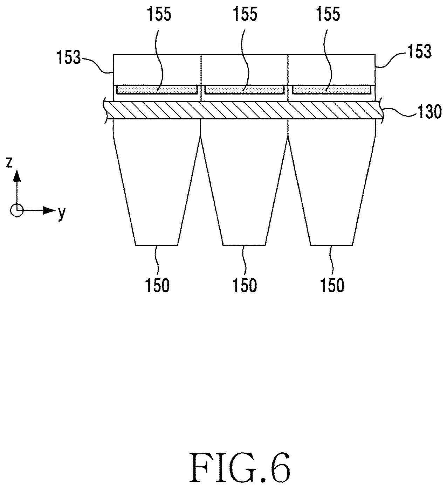

FIG. 6 illustrates buffer members 155 that protect the display 130 in an embodiment.

In an embodiment, the cover parts 153 are spaced apart from the display 130 by a predetermined distance to prevent damage to the display 130 due to interference therebetween. Meanwhile, the distance between the cover parts 153 and the display 130 should be maintained at a predetermined level or less. When the distance between the cover parts 153 and the display 130 is too large, foreign substances may be introduced into the gaps between the cover parts 153 and the display 130, and the foreign substances introduced through the gaps may enter the spaces between the display 130 and the side parts 152. The foreign substances may apply an impact to the edges of the display 130, and thus the display 130 may be damaged.

Accordingly, in an embodiment, the bars may include the buffer members 155 which are attached to the cover parts 153, respectively. For example, the buffer members 155 may be respectively attached to the surfaces of the cover parts 153 facing the display 130. In an embodiment, when the display 130 is assembled to the bars, the buffer members 155 may be located between the cover parts 153 and the display 130. The buffer members 155 may each include a softer material than the cover parts 153 (e.g., rubber, silicone, sponge, etc.). Even if the buffer members 155 come into contact with the display 130, damage to the display 130 may be minimized. Therefore, when the buffer members 155 are included, the distance between the display 130 and the buffer members 155 may be set to be relatively small. The buffer members 155 may reduce the gaps between the cover parts 153 and the display 130, while minimizing damage to the display 130 caused due to interference therebetween. The gaps between the display 130 and the bars 150 may be reduced due to the adoption of the buffer members 155, and thus, the introduction of foreign substances through the gaps between the bars 150 and the display 130 may be prevented.

For example, assuming that the distance between the cover parts 153 and the display 130 is a first distance in the case where the buffer members 155 are not present, it is possible to prevent damage to the display 130 even if the buffer members 155 are spaced apart from the display 130 by a second distance smaller than the first distance when the buffer members 155 are present. Since the overall thickness of the bars 150 is reduced due to the adoption of the buffer members 155, the thickness of the electronic device 100 may also be reduced.

In the illustrated embodiment, air gaps are present between the buffer members 155 and the display 130, but the embodiment of the disclosure is not limited thereto. In another embodiment, no air gap may be present between the buffer members 155 and the display 130. For example, the thickness of the buffer members 155 may be equal to or greater than the distance between the display 130 and the cover parts 153. When the buffer members 155 are attached to the cover parts 153 and the display 130 is assembled to the bars 150, the buffer members 155 may come into contact with the display 130 and accommodate the lifting of the display 130 generated when the display 130 is bent. The buffer members 155 may be disposed between the display 130 and the cover parts 153 in a somewhat compressed state.

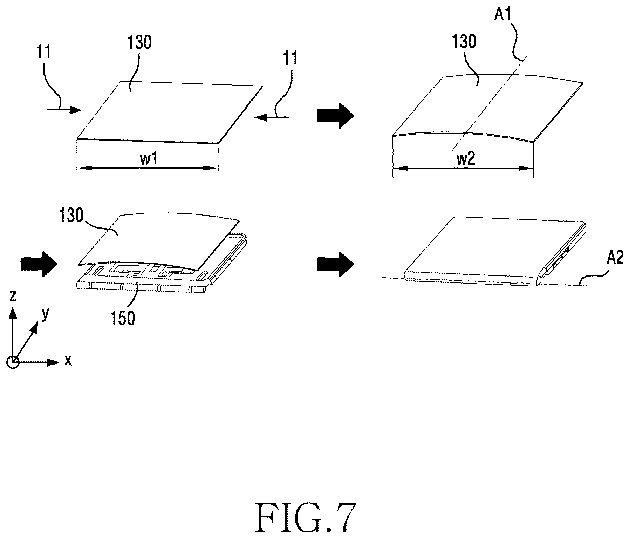

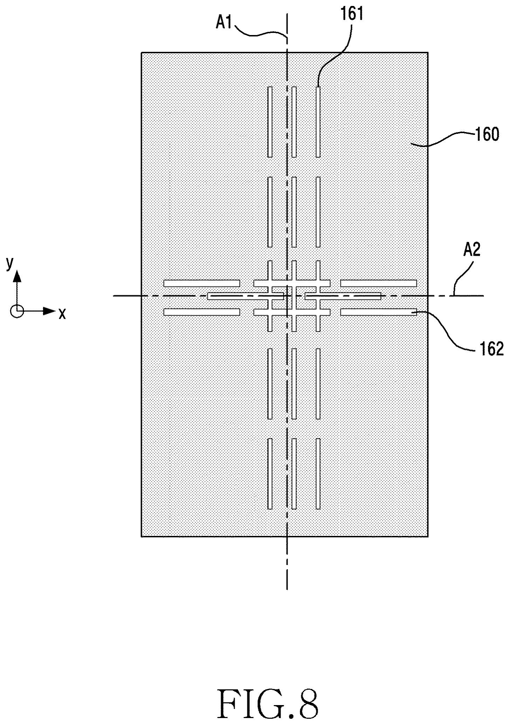

FIG. 7 is a view illustrating a process of assembling the flexible display 130 in an embodiment. FIG. 8 illustrates a lattice structure included in or coupled to the display 130 in an embodiment.

Referring to FIG. 4 together, in an embodiment, the width of the display 130 may be greater than the distance between the cover parts 153 located at both sides of the bars. Therefore, it may be difficult to put the display 130 on the support parts 151 of the plurality of bars 150 while maintaining the plane in the step of manufacturing the electronic device 100.

In an embodiment, the display 130 may be assembled to the plurality of bars 150 in a bent state. For example, when a force in the direction of the arrow 11 is applied to the display 130, the display 130 may be bent about a first bending axis A1, so that the distance w2 between the edges of both sides of the display 130 may become smaller than the width w1 of the original display 130. The bent display 130 may be put on the support parts 151 past the cover parts 153.

In an embodiment, the display may be bent in a direction perpendicular to the expansion direction. A portion of the display may be bent 180 degrees relative to the other portion about the second bending axis A2.

Referring to FIG. 6, in an embodiment, the electronic device 100 may include a support plate 160 disposed under the display 130. In an embodiment, the support plate 160 may be included as a component of the display 130. The support plate 160 may have substantially the same area as the display 130. In an embodiment, the support plate 160 may be formed of a metal material. The support plate 160 may provide a force to resist the pressure when a user applies pressure to the display 130. In addition, the support plate 160 may help improve the surface quality of the display 130.

In an embodiment, the support plate 160 may include at least one slit penetrating the support plate 160. For example, the support plate 160 including slits extending in a first direction may be bent relatively easily about an axis parallel to the first direction.

Referring to FIG. 8, in an embodiment, the support plate 160 may include a first slit 161. The first slit 161 may penetrate both surfaces of the support plate 160. The slit 161 may have a profile extending in the same or substantially the same direction as the first bending axis A1. For example, the support plate 160 may include one or more slits 161 extending in the y-axis direction. Due to the slits 161 extending in the y-axis direction, the display 130 may be easily bent about the y-axis. The width in the x-axis direction of the bent display 130 may be reduced, and may be relatively easily assembled to the plurality of bars 150.

In an embodiment, the support plate 160 may include a second slit 162. The second slit 162 may penetrate both surfaces of the support plate 160. The slit 162 may have a profile extending in the same or substantially the same direction as the second bending axis A2.

In the illustrated embodiment, the support plate 160 may include a plurality of slits. For example, according to the illustrated embodiment, 15 first slits 161 may be arranged in a 3 x 5 array. The embodiment of FIG. 8 is merely an example, and the embodiment of the disclosure is not limited thereto. In another embodiment, the number or arrangement of the slits 161 and 162 may vary.

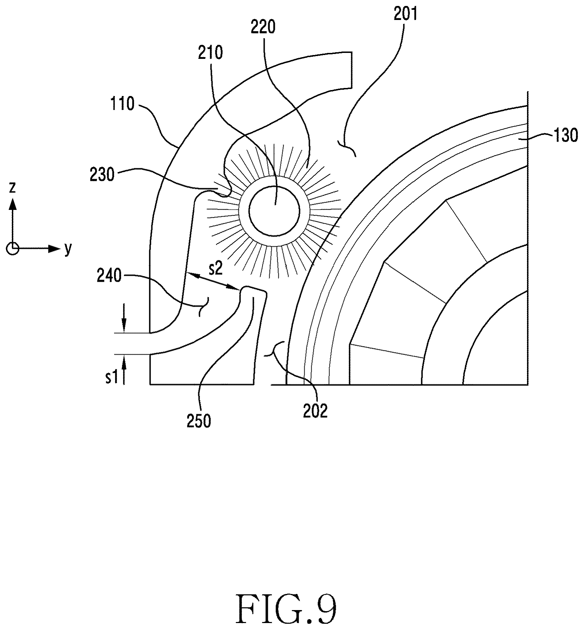

FIG. 9 is a cross-sectional view taken along line I-I of the electronic device 100 of FIG. 1A including a foreign substance prevention structure according to an embodiment.

In an embodiment, the electronic device 100 may include a first gap 201 between the outer surface of the display 130 and the first frame 110. Foreign substances may be introduced into the electronic device 100 through the gap 201 between the frame and the display 130. When the foreign substances are introduced into the electronic device 100, the display 130 may be damaged or the foreign substances may have a negative effect on other electronic components. For example, the surface of the display 130 may be scratched by the foreign substances while the display 130 moves into or out of the housing according to the expansion or contraction of the housing. In an embodiment, the electronic device 100 may be provided with a component and/or structure that prevents foreign substances from being introduced into the housing through the first gap 201 between the frame and the display 130.

In an embodiment, the electronic device 100 includes a foreign substance prevention structure that closes the first gap 201 between the first frame 110 and the display 130. In an embodiment, the foreign substance prevention structure may include a shaft 210 extending in the x-axis direction of the electronic device 100 and a brush member 220 disposed on the outer peripheral surface of the shaft 210.

In an embodiment, the shaft 210 may be rotatably installed on the first frame 110. For example, both ends of the shaft 210 may be installed in a structure defined by the first frame 110.

In an embodiment, the brush member 220 may be disposed on at least a portion of the outer peripheral surface of the shaft 210. The brush member 220 may have a shape radiating around the rotation axis of the shaft 210. In an embodiment, the brush member 220 may include a material capable of trapping foreign substances. If foreign substances are caught on the brush member 220, the foreign substances may not be easily separated from the brush member 220 unless a force (or impact) is applied to the foreign substances. In an embodiment, the brush member 220 may include densely packed fibers.

In an embodiment, at least a portion of the brush member 220 may be in contact with the display 130 to close the first gap 201 between the first frame 110 and the display 130. The brush member 220 may prevent foreign substances from being introduced into the housing through the first gap 201 between the first frame 110 and the display 130. For example, when the foreign substances enter the first gap 201 between the first frame 110 and the display 130, the foreign substances are blocked by the brush member 220 so that the foreign substances cannot enter the second gap 202 between the first frame 110 and the display 130. The second gap 202 may mean a space separated from the first gap 201 by the brush member 220.

In an embodiment, the brush member 220 may include a material that does not damage the display 130. In an embodiment, the brush member 220 may adopt a material having a lower hardness than the outermost layer of the display 130. This is to minimize damage to the display 130 while the surface of the display 130 is swept by the brush member 220 according to the expansion or contraction of the housing.

In an embodiment, the electronic device 100 may include a filtering structure 230 capable of separating foreign substances trapped in the brush member 220 from the brush member 220. In an embodiment, the filtering structure 230 may be included in the first frame 110. For example, the first frame 110 may include a protrusion extending from the inner surface toward the brush member 220, and the filtering structure 230 may be implemented by the protrusion of the first frame 110. As another example, the filtering structure 230 may be coupled to the first frame 110 as a separate component from the first frame 110.

In an embodiment, the electronic device 100 may include a hole 240 (or an opening) through which the foreign substances separated from the brush member 220 by the filtering structure 230 may be discharged to the outside of the electronic device 100. In an embodiment, the hole 240 may include a space that becomes wider toward the brush member 220. For example, the hole 240 seen from the outside of the electronic device 100 may have a first size s1 and may have a second size s2 in a portion closer to the brush member 220, the first size s1 being smaller than the second size s2. In the illustrated embodiment, the shape of the hole 240 is merely an example, and an embodiment of the disclosure is not limited thereto. For example, the size s2 of the hole 240 in a portion closer to the brush member 220 may be the same as the size s1 of the hole 240 seen from the outside.

In an embodiment, the electronic device 100 may include a blocking structure 250 that prevents the foreign substance separated from the brush member 220 by the filtering structure 230 from being introduced into the housing (e.g., the second gap 202) again. In an embodiment, the blocking structure 250 may be included in the first frame 110. For example, the first frame 110 may include a protrusion extending from the inner surface toward the brush member 220, and the blocking structure 250 may be implemented by the protrusion of the first frame 110. In an embodiment, the blocking structure 250 may separate the hole 240 and the second gap 202.

In an embodiment, since the brush member 220 comes into contact with the surface of the display 130, the brush member 220 may filter foreign substances on the surface of the display 130. For example, when a portion of the display 130 moves into the first frame 110 while the housing is being contracted, foreign substances on the portion of the display 130 exposed on the front surface of the electronic device 100 may move to the inside of the first frame 110 together with the display 130. In an embodiment, since the foreign substances on the surface of the display 130 move along the display 130 and are swept by the brush member 220, the foreign substances do not enter the inside of the housing (e.g., the second gap 202) even if the display 130 further moves to the inside of the first frame 110. In an embodiment, in the electronic device, the brush member 220 may prevent the entrance of foreign substances even when the display 130 does not move with respect to the first frame 110.

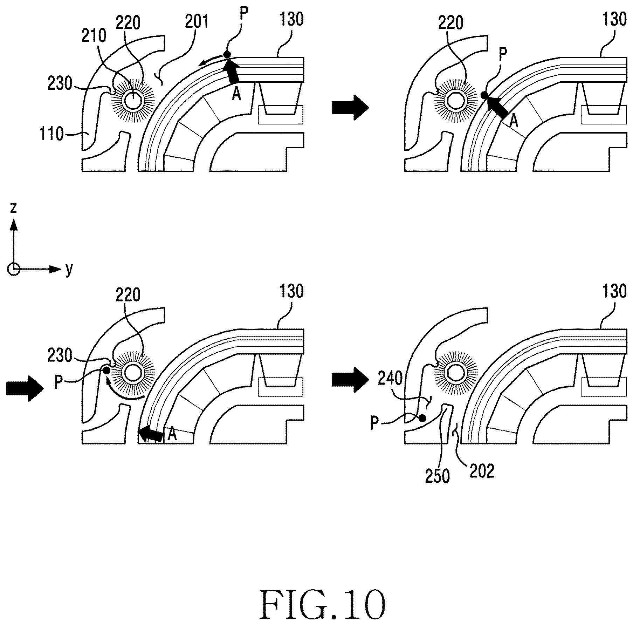

FIG. 10 is a view illustrating a process in which foreign substances on the surface of the display 130 are discharged to the outside of the electronic device 100 by the foreign substance prevention structure according to an embodiment.

At a specific point in time, the foreign substances P may be located at a point A of the display 130. As the housing is contracted, the point A of the display 130 may move to the inside of the first frame 110. The foreign substances P may move in the -y-axis direction toward the first frame 110 together with the display 130. When the point A reaches the brush member 220, the foreign substances P may be separated from the display 130. The foreign substances P separated at the point A may be trapped in the brush member 220. While the housing is being contracted, the point A may move to a deeper portion of the first frame 110 past the brush member 220. The display 130 may rotate the brush member 220 while moving into the first frame 110. As the brush member 220 rotates, the foreign substances P may rotate together with the brush member 220. When the foreign substances P caught in the brush member 220 reach the filtering structure 230, the filtering structure 230 may separate the foreign substances P from the brush member 220. The foreign substances P escaping from the brush member 220 by the filtering structure 230 may be discharged to the outside of the electronic device 100 through the hole 240 included in the first frame 110. The blocking structure 250 of the first frame 110 prevents the foreign substances P separated from the brush member 220 from falling into the second gap 202 between the first frame 110 and the display 130.

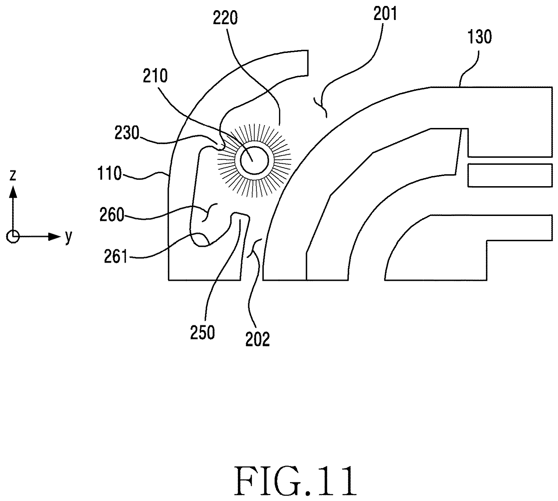

FIG. 11 is a view illustrating an electronic device including a cavity for collecting foreign substances therein in an embodiment. In FIG. 11, structures or components indicated by the same reference numerals as those in FIG. 9 are substantially the same as those in FIG. 9, and redundant descriptions will be omitted.

In an embodiment, the first frame 110 may include a cavity 260 for collecting foreign substances. Unlike the hole 240 of FIG. 9, the cavity 260 may not penetrate the first frame 110. In an embodiment, foreign substances separated from the brush member 220 by the filtering structure 230 may be collected in the cavity 260.

In an embodiment, in the electronic device 100, an adhesive member having adhesiveness may be disposed in the cavity 260. For example, the adhesive member may be implemented in such a way that an adhesive material is applied on the surface 261 defining the cavity 260. As another example, the adhesive member may be implemented by attaching a coating layer having adhesiveness on the surface 261 defining the cavity 260. In an embodiment, the foreign substances falling into the cavity 260 are attached to the adhesive member so as not to escape through the second gap 202.

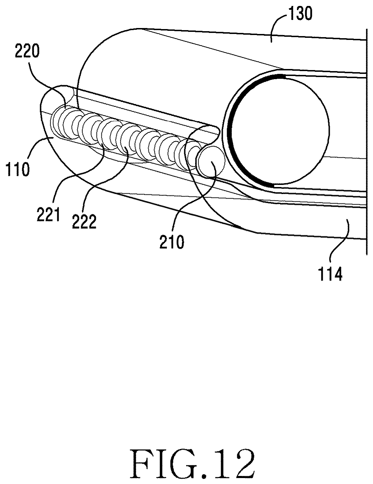

FIG. 12 is a view of an embodiment illustrating brush members 220 included in the foreign substance prevention structure of the FIG. 9.

In an embodiment, the brush members 220 may be disposed along the longitudinal direction of the shaft 210. In an embodiment, the brush members 220 may be disposed on at least a portion of the outer peripheral surface of the shaft 210. In an embodiment, the brush members 220 may be disposed at a predetermined interval along the longitudinal direction of the shaft 210. In an embodiment, a first brush member 221 and a second brush member 222 may be disposed to be spaced apart from each other, and no other brush members may be present between the first brush member 221 and the second brush member 222. For example, the first brush member 221 and the second brush member 222 may be respectively disposed on first and second outer peripheral surfaces of the shaft 210, and on a third outer peripheral surface between the first and second outer peripheral surfaces, no brush member may be disposed.

When the brush members 220 are disposed on a portion of the outer peripheral surface of the shaft 210, the area in which the brush members 220 and the display 130 are in contact with each other may be reduced compared to the case where the brush members 220 are disposed on the entire outer peripheral surface. Accordingly, while the display 130 is swept by the brush members 220 while moving, the frictional force between the display 130 and the brush member 220 may be reduced.

Alternatively, in an embodiment, the brush members 220 may be replaced with rollers free of separate fibers. By omitting the brush members 220, scratches on the display 130 due to the brush members 220 may be minimized, and the area in which the foreign substance prevention structure 200 comes into contact with the display 130 may be minimized so as to allow the foreign substances to be discharged.

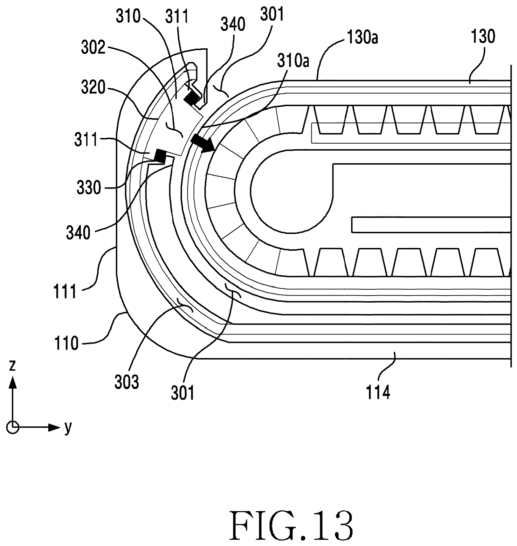

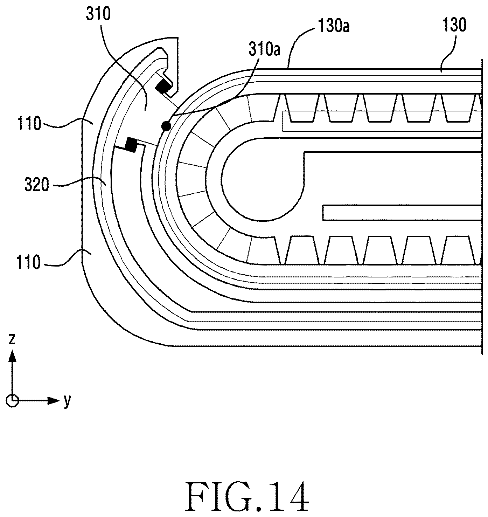

FIG. 13 is a cross-sectional view taken along line I-I of the electronic device 100 of FIG. 1A including the foreign substance prevention structure in an embodiment. FIG. 14 is a view of an embodiment illustrating a state when the foreign substance prevention structure of the FIG. 13 embodiment operates.

In an embodiment, the inner surface of the first frame 110 may be spaced apart from the display 130. Accordingly, the first side wall 111 of the first frame 110 does not interfere with the display 130 while the display 130 moves in response to the expansion or contraction of the housing. As the first frame 110 is spaced apart from the display 130, a gap 301 may be formed between the first frame 110 and the display 130. When there is no separate structure for preventing the introduction of the foreign substance, the foreign substances may be introduced into the housing through the corresponding gap 301.

In an embodiment, the electronic device 100 may include a pad 310 capable of closing the gap 301 between the first frame 110 and the display 130. A portion of the pad 310 may be located in the gap 301 between the first frame 110 and the display 130. When the pad 310 is located in the gap 301, foreign substances may be prevented from being introduce from the outside of the housing.

In an embodiment, the first frame 110 may include a space 302 that is capable of accommodating a portion of the pad 310 therein. The space 302 may be connected to the gap 301 between the first frame 110 and the display 130 through an opening. A portion of the pad 310 may be located in the inner space 302 of the first frame 110, and a portion may protrude to the outside through the opening in the first frame 110.

In an embodiment, the pad 310 may be operatively assembled to the first frame 110. In an embodiment, the pad 310 may be movably coupled to the first frame 110. In an embodiment, a contact surface 310a of the pad 310 may come into contact with the surface of the display 130 in response to the operation of the pad 310. For example, when the pad 310 moves in the direction indicated by the arrow, the contact surface 310a of the pad 310 may come into contact with the surface of the display 130. In an embodiment, the contact surface 310a of the pad 310 may have a curvature corresponding to the curvature of the display 130.

In an embodiment, the pad 310 may include an engagement step 311 located inside the first frame 110. When the pad 310 moves a predetermined distance in the direction indicated by the arrow, the engagement step 311 of the pad 310 may be accommodated in the engagement step reception portion 340 in the first frame 110. The movement of the pad 310 in the arrow direction may be restricted by the engagement step 311.

In response to the operation of the pad 310 in an embodiment, the gap between the first frame 110 and the display 130 may be closed. The distance between the contact surface 310a of the pad 310 and the surface of the display 130 may be adjusted in response to the operation of the pad 310. For example, the pad 310 may move toward the display 130 so as to bring the contact surface 310a into contact with the surface of the display 130 to close the gap between the first frame 110 and the display 130.

In an embodiment, the electronic device 100 may include a mechanism for moving the pad 310. In an embodiment, the mechanism may include an arm part 320 connected to the pad 310. In an embodiment, the arm part 320 may be in contact with or may be coupled to the pad 310. In an embodiment, the arm part 320 may move the pad 310 in the direction indicated by the arrow. The arm part 320 may move the pad 310 in the direction indicated by the arrow, and the contact surface 310a of the pad 310 may come closer to the surface of the display 130.

In an embodiment, the arm part 320 may be disposed in the space 303 included in the inside of the first frame 110. The arm part 320 may operate in the space 303 of the first frame 110.

In an embodiment, the arm part 320 may operate in various ways. For example, one end of the arm part 320 may be connected to a component that moves the arm part 320. For example, a linear motor is coupled to one end of the arm part 320, and the arm part 320 may move in the y-axis direction or the -y-axis direction in response to the driving of the motor. When the arm part 320 moves in the y-axis direction, the pad 310 may be pushed in the direction indicated by the arrow. As another example, a magnetic material may be connected to one end of the arm part 320, and the electronic device 100 may include a complementary magnetic material located in a region close to the magnetic material connected to the arm part. The electronic device 100 may operate the arm part 320 and the pad 310 by controlling the distance or magnetic force between both the magnetic materials.

In an embodiment, the component for operating the arm part 320 may include means that is capable of easily adopting the arm part 320 by a person ordinarily skilled in the art to move the arm part 320 in one direction (e.g., the y-axis direction). In an embodiment, the arm part 320 may be implemented by a muscle wire having a property of changing a length in response to an electric current. The electric current flowing in the muscle wire raises the temperature of the muscle wire, which may cause the length of the muscle wire to contract. As the muscle wire contracts, the pad 310 may be pushed in the direction indicated by the arrow. When no current is supplied to the muscle wire, the muscle wire may be stretched again, and the pad 310 may be moved in the direction opposite to the direction indicated by the arrow.

In another embodiment, the arm part 320 may be implemented by a wire connected to the motor. As the motor is driven, the length of the wire may increase or decrease. For example, when the motor reduces the length of the wire, the wire may push the pad 310 in the direction indicated by the arrow. When the length of the wire is increased by driving the motor in the opposite direction, the wire may push the pad 310 in the direction opposite to the direction indicated by the arrow.

In an embodiment, the electronic device 100 may include an elastic member 330 that provides an elastic force to the pad 310. The elastic member 330 may be disposed between the engagement step reception portion 340 of the first frame 110 and the engagement step 311 of the pad 310.

In an embodiment, the elastic member 330 may be disposed between the pad 310 and the engagement step reception portion 340 to prevent the introduction of foreign substances into the inner space of the first frame 110 from the outside. In addition, the elastic member 330 may be deformed to correspond to the space between the engagement step 311 of the pad 310 and the engagement step reception portion 340, wherein the space is increased or decreased in response to the movement of the pad 310. When the pad 310 moves in the direction indicated by the arrow, the elastic member 330 may accumulate elastic energy while being contracted. When the force pushing the pad 310 in the direction indicated by the arrow disappears, the elastic member 330 may move the pad 310 in the direction indicated by the arrow while being restored. The elastic member 330 may include, for example, at least one of rubber, sponge, silicone, a spring, and a urethane material.

In an embodiment, the pad 310 may be separated from the display 130 while the housing is being expanded or contracted. When the pad 310 is in contact with the display 130 while the housing is being expanded or contracted, the display 130 may be damaged by the pad 310. In an embodiment, the pad 310 may operate to retract from the display 130 while the size of the housing is changed, so that the movement of the display 130 is not hindered by the pad 310.

In an embodiment, the pad 310 may operate to advance toward the display 130 in a state in which the display 130 is no longer moved after the housing has completed expansion or contraction. By coming into contact with the surface of the display 130, the contact surface 310a of the pad 310 closes the gap between the first side wall 111 and the display 130, which may prevent foreign substances from being introduced into the housing.

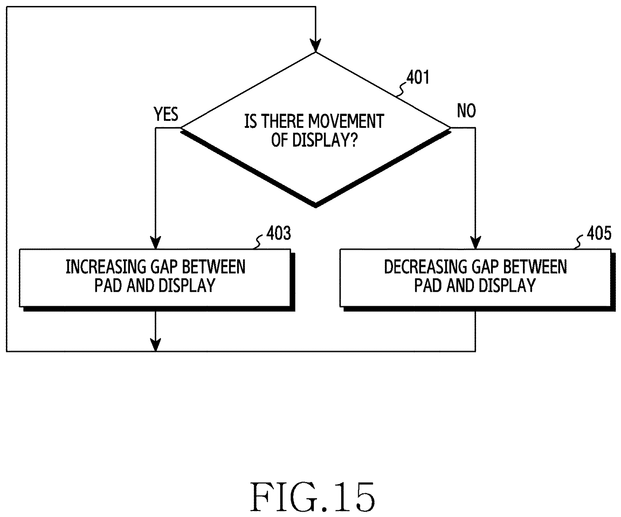

FIG. 15 is a flowchart for adjusting the gap between the display and a frame by the pad 310 according to an embodiment. The operations of FIG. 15 may be performed by an electronic device (e.g., the electronic device 100 of FIG. 1A) including the foreign substance prevention structure of FIG. 14.

In an embodiment, the electronic device may determine whether or not the display 130 moves in operation 401. The electronic device may determine whether or not the display 130 moves by using at least one sensor configured to detect the movement of the display 130 or the position of the display 130 with respect to a frame (e.g., the first frame 110 of FIG. 1A). The at least one sensor may include, for example, at least one of a proximity sensor, a Hall sensor, a distance sensor, or a switch.

In an embodiment, in operation 403, the electronic device may increase the gap between the pad 310 and the display 130 based on the determination that there is a movement of the display 130. For example, when the arm part 320 connected to the pad 310 is pushing the pad 310, the electronic device may stop the operation of the arm part 320. For example, the electronic device may cut off the power of the motor connected to the arm part 320 or cut off the current supplied to the arm part 320 (e.g., the muscle wire in FIG. 14). When the arm part 320 does not operate, the pad 310 moves away from the display 130 by the elastic member 330, and a gap may occur between the display 130 and the pad 310.

In an embodiment, in operation 405, the electronic device may decrease the gap between the pad 310 and the display 130 based on the determination that there is no movement of the display 130. For example, by operating the arm part 320 connected to the pad 310 to push the pad 310 toward the display 130, the gap between the display 130 and the pad 310 may be made to zero.

Although the above-described embodiments have been described focusing on the components illustrated in the figures, the disclosure is not limited to embodiments including only the components illustrated in the respective figures. Components included in different figures may be combined to configure an embodiment. For example, the electronic device of FIG. 1A may include both the foreign substance prevention structure of FIG. 4 and the foreign substance prevention structure of FIG. 9, FIG. 12, FIG. 13, or FIG. 14.

Disclosed is an electronic device which may include: a housing including a first frame including a first side wall at least constituting a side surface in a first direction of the electronic device, and a second frame including a second side wall at least constituting a side surface in a second direction opposite to the first direction, the second frame being coupled to the first frame to be movable in the first direction or the second direction; a flexible display disposed in a space surrounded by the first frame and the second frame, the flexible display being drawn into or drawn out from an inside of the first frame by the movement of the second frame; and a foreign substance prevention structure including a shaft partly located in a gap between the first side wall and the display and extending in a longitudinal direction of the first side wall, and a brush member disposed on at least a portion of an outer peripheral surface of the shaft and extending toward a surface of the display.

The foreign substance prevention structure may further include a protrusion extending from the first side wall toward the brush member, the foreign substance prevention structure being configured to separate foreign substances trapped in the brush member from the brush member.

The first side wall includes a hole that connects a gap between the first side wall and the display to an outside of the electronic device, and the foreign substances separated from the brush member by the protrusion may be discharged to the outside of the electronic device through the hole.

The first side wall may include a blocking structure extending toward the shaft and configured to separate the hole and the inner space of the housing.

The brush member may be disposed on a first outer peripheral surface of the shaft and a second outer peripheral surface spaced apart from the first outer peripheral surface by a predetermined distance in an axial direction.

The electronic device may further include a plurality of bars configured to support a portion of the display that is selectively exposed to an outside of the electronic device depending on whether the housing is expanded, wherein at least one of the plurality of bars may include cover parts disposed on both sides thereof, at least some of the cover parts being disposed on an edge of the display and a portion within a predetermined distance from the edge to an inside of the display.

The cover parts may be disposed to be spaced apart from the outermost layer of the display by a predetermined distance.

At least one of the plurality of bars may include a buffer member attached to the cover parts and located between the display and the cover parts.

Also disclosed is an electronic device which may include: a housing including a first frame including a first side wall at least constituting a side surface in a first direction of the electronic device, and a second frame including a second side wall at least constituting a side surface in a second direction opposite to the first direction, the second frame being coupled to the first frame to be movable in the first direction or the second direction; a flexible display disposed in a space surrounded by the first frame and the second frame, the flexible display being drawn into or drawn out from an inside of the first frame by the movement of the second frame; and a plurality of bars configured to support a bending portion of the display, wherein at least one of the plurality of bars may include cover parts disposed on both sides thereof, at least some of the bars being disposed on an edge of the display.

The cover parts may be disposed to be spaced apart from the outermost layer of the display by a predetermined distance.

At least one of the plurality of bars may include a buffer member attached to the cover parts and located between the display and the cover parts.

A distance between the cover parts may be shorter than a length in a third direction perpendicular to the first direction or the second direction of the outermost layer of the display.

The electronic device may further include a lattice structure coupled to the bottom surface of the display, wherein the lattice structure may include at least one slit extending in the first direction.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

## Claims

1. An electronic device (100) comprising:
a housing including a first frame (110) including a first side wall (111) at least constituting a side surface in a first direction of the electronic device (100), and a second frame (120) including a second side wall at least constituting a side surface in a second direction opposite to the first direction, the second frame (120) being coupled to the first frame (110) to be movable in the first direction or the second direction;
a flexible display (130) disposed in a space surrounded by the first frame (110) and the second frame (120), the flexible display (130) being drawn into or drawn out from an inside of the first frame (110) by the movement of the second frame (120); and
a foreign substance prevention structure including a pad (310) assembled to the first frame (110) and partly located in a gap (301) between the first frame (110) and the display (130), and a mechanism configured to move the pad (310) toward a surface of the display (130), wherein by coming into contact with the surface of the display (130), the pad (310) closes a gap between the first side wall (111) and the display (130).

2. The electronic device (100) of claim 1, wherein the foreign substance prevention structure includes an elastic member (330) disposed between the pad (310) and the first side wall (111).

3. The electronic device (100) of claim 2, wherein the elastic member (330) includes sponge or rubber.

4. The electronic device (100) of claim 1, wherein the mechanism includes an arm part (320) disposed in a space inside the first frame (110) and partly connected to the pad (310), and
as the arm part (320) moves, the pad (310) is selectively brought into contact with the surface of the display (130).

5. The electronic device (100) of claim 1, further comprising:
a plurality of bars (150) configured to support a portion of the display (130) that is selectively exposed to an outside of the electronic device (100) depending on whether the housing is expanded,
wherein at least one of the plurality of bars (150) includes cover parts (153) disposed on both sides thereof, at least some of the cover parts (153) being disposed on an edge of the display (130) and a portion within a predetermined distance from the edge to an inside of the display (130).

6. The electronic device (100) of claim 5, wherein the cover parts (153) are spaced apart from an outermost layer of the display (130) by a predetermined distance.

7. The electronic device (100) of claim 5, wherein at least one of the plurality of bars (150) includes a buffer member (155) attached to the cover parts (153) and located between the display (130) and the cover parts (153).

8. The electronic device of claim 5, further comprising:
a lattice structure coupled to the display (130),
wherein the lattice structure includes at least one slit (161) extending in the first direction.

## Patentansprüche

1. Elektronische Vorrichtung (100), umfassend:
ein Gehäuse, das einen ersten Rahmen (110), der eine erste Seitenwand (111) beinhaltet, die mindestens eine Seitenoberfläche in einer ersten Richtung der elektronischen Vorrichtung (100) bildet, und einen zweiten Rahmen (120) beinhaltet, der eine zweite Seitenwand beinhaltet, die mindestens eine Seitenoberfläche in einer zweiten Richtung entgegengesetzt zu der ersten Richtung bildet, wobei der zweite Rahmen (120) an den ersten Rahmen (110) gekoppelt ist, um in der ersten Richtung oder der zweiten Richtung beweglich zu sein;
eine flexible Anzeige (130), die in einem Raum angeordnet ist, der von dem ersten Rahmen (110) und dem zweiten Rahmen (120) umgeben ist, wobei die flexible Anzeige (130) durch die Bewegung des zweiten Rahmens (120) in eine Innenseite des ersten Rahmens (110) hineingezogen oder aus dieser herausgezogen wird; und
eine Fremdstoffverhinderungsstruktur, die eine Unterlage (310), die an dem ersten Rahmen (110) montiert ist und sich teilweise in einer Lücke (301) zwischen dem ersten Rahmen (110) und der Anzeige (130) befindet, und einen Mechanismus beinhaltet, der dazu konfiguriert ist, die Unterlage (310) in Richtung einer Oberfläche der Anzeige (130) zu bewegen, wobei die Unterlage (310) durch den Kontakt mit der Oberfläche der Anzeige (130) eine Lücke zwischen der ersten Seitenwand (111) und der Anzeige (130) schließt.

2. Elektronische Vorrichtung (100) nach Anspruch 1, wobei die Fremdstoffverhinderungsstruktur ein elastisches Element (330) beinhaltet, das zwischen der Unterlage (310) und der ersten Seitenwand (111) angeordnet ist.

3. Elektronische Vorrichtung (100) nach Anspruch 2, wobei das elastische Element (330) Schwamm oder Gummi beinhaltet.

4. Elektronische Vorrichtung (100) nach Anspruch 1, wobei der Mechanismus ein Armteil (320) beinhaltet, das in einem Raum innerhalb des ersten Rahmens (110) angeordnet und teilweise mit der Unterlage (310) verbunden ist, und
wenn sich das Armteil (320) bewegt, wird die Unterlage (310) selektiv in Kontakt mit der Oberfläche der Anzeige (130) gebracht.

5. Elektronische Vorrichtung (100) nach Anspruch 1, ferner umfassend:
eine Vielzahl von Balken (150), die dazu konfiguriert sind, einen Abschnitt der Anzeige (130) zu tragen, der abhängig davon, ob das Gehäuse erweitert ist, selektiv einer Außenseite der elektronischen Vorrichtung (100) ausgesetzt ist,
wobei mindestens einer aus der Vielzahl von Balken (150) Abdeckteile (153) beinhaltet, die auf beiden Seiten davon angeordnet sind, wobei mindestens einige der Abdeckteile (153) an einer Kante der Anzeige (130) und einem Abschnitt innerhalb eines vorbestimmten Abstands von der Kante zu einer Innenseite der Anzeige (130) angeordnet sind.

6. Elektronische Vorrichtung (100) nach Anspruch 5, wobei die Abdeckteile (153) von einer äußersten Schicht der Anzeige (130) um einen vorbestimmten Abstand beabstandet sind.

7. Elektronische Vorrichtung (100) nach Anspruch 5, wobei mindestens einer aus der Vielzahl von Balken (150) ein Pufferelement (155) beinhaltet, das an den Abdeckteilen (153) befestigt ist und sich zwischen der Anzeige (130) und den Abdeckteilen (153) befindet.

8. Elektronische Vorrichtung nach Anspruch 5, femer umfassend:
eine Gitterstruktur, die an die Anzeige (130) gekoppelt ist,
wobei die Gitterstruktur mindestens einen Schlitz (161) beinhaltet, der sich in die erste Richtung erstreckt.

## Revendications

1. Dispositif électronique (100) comprenant :
un boîtier comprenant un premier cadre (110) comprenant une première paroi latérale (111) constituant au moins une surface latérale dans une première direction du dispositif électronique (100), et un second cadre (120) comprenant une seconde paroi latérale constituant au moins une surface latérale dans une seconde direction opposée à la première direction, le second cadre (120) étant couplé au premier cadre (110) pour être mobile dans la première direction ou la seconde direction ;
un affichage souple (130) disposé dans un espace entouré par le premier cadre (110) et le second cadre (120), l'affichage souple (130) étant tiré dans un intérieur du premier cadre (110) ou tiré hors de celui-ci par le mouvement du second cadre (120) ; et
une structure de prévention de substances étrangères comprenant un coussinet (310) assemblé au premier cadre (110) et partiellement situé dans un espace (301) entre le premier cadre (110) et l'affichage (130), et un mécanisme conçu pour déplacer le coussinet (310) vers une surface de l'affichage (130), dans lequel, en entrant en contact avec la surface de l'affichage (130), le coussinet (310) ferme un espace entre la première paroi latérale (111) et l'affichage (130).

2. Dispositif électronique (100) de la revendication 1, dans lequel la structure de prévention de substance étrangère comprend un élément élastique (330) disposé entre le coussinet (310) et la première paroi latérale (111).

3. Dispositif électronique (100) de la revendication 2, dans lequel l'élément élastique (330) comprend une éponge ou du caoutchouc.

4. Dispositif électronique (100) de la revendication 1, dans lequel le mécanisme comprend une pièce de bras (320) disposée dans un espace à l'intérieur du premier cadre (110) et partiellement reliée au coussinet (310), et
lorsque la pièce de bras (320) se déplace, le coussinet (310) est sélectivement mis en contact avec la surface de l'affichage (130).

5. Dispositif électronique (100) de la revendication 1, comprenant en outre :
une pluralité de barres (150) conçues pour supporter une partie de l'affichage (130) qui est exposée sélectivement à un extérieur du dispositif électronique (100) selon que le boîtier est étendu ou non,
dans lequel au moins l'une de la pluralité de barres (150) comprend des pièces de couvercle (153) disposées des deux côtés de celle-ci, au moins certaines des pièces de couvercle (153) étant disposées sur un bord de l'affichage (130) et une partie à une distance prédéterminée du bord vers un intérieur de l'affichage (130).

6. Dispositif électronique (100) de la revendication 5, dans lequel les pièces de couvercle (153) sont espacées d'une couche la plus à l'extérieur de l'affichage (130) d'une distance prédéterminée.

7. Dispositif électronique (100) de la revendication 5, dans lequel au moins l'une de la pluralité de barres (150) comprend un élément de tampon (155) fixé aux pièces de couvercle (153) et situé entre l'affichage (130) et les pièces de couvercle (153).

8. Dispositif électronique de la revendication 5, comprenant en outre :
une structure en treillis couplée à l'affichage (130),
dans lequel la structure en treillis comprend au moins une fente (161) s'étendant dans la première direction.
